# EUROPÄISCHE PATENTSCHRIFT

(11) **EP 1 052 591 B1**
(45) Veröffentlichungstag und Bekanntmachung des Hinweises auf die Patenterteilung: **16.07.2008**
(21) Anmeldenummer: 00108210.6
(22) Anmeldetag: 14.04.2000
(51) Int. Cl.: G06K 7/10

(54) **Optoelektronische Vorrichtung**
Optoelectronic device
Dispositif optoélectronique

(30) Priorität: 08.05.1999 DE 19921479
(43) Veröffentlichungstag der Anmeldung: 15.11.2000
(73) Patentinhaber: Leuze electronic GmbH + Co. KG, 73277 Owen/Teck (DE)
(72) Erfinder: Droemer, Jörg, 72574 Bad Urach-Wittlingen (DE); Wörner, Jörg, 73235 Weilheim/Teck (DE)
(74) Vertreter: Ruckh, Rainer Gerhard

(56) Entgegenhaltungen:
- EP-A- 0 574 024
- US-A- 5 498 868

## Beschreibung

Die Erfindung betrifft eine optoelektronische Vorrichtung gemäß dem Oberbegriff des Anspruchs 1 und ein Verfahren zum Betrieb gemäß dem Oberbegriff des Anspruchs 18.

Eine optoelektronische Vorrichtung gemäß dem Oberbegriff des Anspruchs 1 ist aus der US 5,498,868 bekannt. Diese Vorrichtung ist als Barcodeleser ausgebildet, der einen Sender aufweist, dessen Sendelichtstrahlen über einen variablen Fokussierspiegel in Form einer verspiegelten Membran geführt werden. Durch Anlegen von elektrischen Feldern kann die Durchbiegung der Membran geändert werden und dadurch die Fokuslage der Sendelichtstrahlen.

Die EP 0 574 024 A2 betrifft einen Barcodescanner, bei welchem unter anderem die Fokuslage der Sendelichtstrahlen, mit welchen Barcodes abgetastet werden, geändert werden kann.

Aus der DE 44 14 449 C2 ist eine Vorrichtung bekannt, mittels der Marken insbesondere Barcodes, in einem vorgegebenen Abstandsbereich zur Vorrichtung erfasst werden.

Hierzu werden die fokussierten Sendelichtstrahlen periodisch. über die entsprechenden Marken geführt. Die von den Marken reflektierten Empfangslichtstrahlen weisen entsprechend dem Kontrastmuster der Marken eine Amplitudenmodulation auf, welche in einer Auswerteeinheit ausgewertet wird. Die analogen Empfangssignale am Ausgang des Empfängers werden über einen n-bit-Anlaog-Digitalwandler in ein digitales Empfangssignal umgesetzt. Dieses Empfangssignale wird einem Filter zugeführt wird, welches einen zeitlich veränderlichen Koeffizientensatz aufweist. Die verschiedenen Koeffizientensätze des Filters sind so gewählt, daß die Übertragungscharakteristik des Filters für die einzelnen Koeffizienten jeweils im wesentlich dem Inversen des Frequenzspektrums der räumlichen Intensitätsverteilung des Sendelichtstrahls in einem bestimmten Abstand von der Vorrichtung entspricht. Dadurch wird erreicht, daß je nach Wahl der Koeffizientensätze die Marken in einem bestimmten Abstandsbereich erfaßbar sind. Durch Variation der Koeffizientensätze können somit Marken in unterschiedlichen Abstandsbereichen zur Vorrichtung erfaßt werden.

Nachteilig hierbei ist zum einen der relativ große Rechenaufwand, der zur Bestimmung der Koeffizientensätze nötig ist. Ferner ist nachteilig, daß die Abstandsbereiche zwar variierbar sind, jedoch eine Einstellung der Vorrichtung auf einen optimalen Abstandsbereich hiermit nicht möglich ist. Vielmehr werden die einzelnen Koeffizientensätze periodisch variiert, so daß dementsprechend auch die jeweiligen Abstandsbereiche periodisch eingestellt werden.

Der Erfindung liegt die Aufgabe zugrunde, eine Vorrichtung der eingangs genannten Art so auszubilden, daß die Fokuslage der Sendelichtstrahlen möglichst genau einstellbar ist.

Zur Lösung dieser Aufgabe sind die Merkmale der Ansprüche 1 und 18 vorgesehen. Vorteilhafte Ausführungsformen und zweckmäßige Weiterbildungen der Erfindung sind in den Unteransprüchen beschrieben.

Erfindungsgemäß werden die Sendelichtstrahlen an einer verspiegelten Membran reflektiert, welche durch Anlegen eines elektrischen Felds durchgebogen werden kann. Entsprechend der Stärke des Feldes ergibt sich eine bestimmte Durchbiegung der Membran, wodurch eine entsprechende Fokuslage der Sendelichtstrahlen erhalten wird.

Die Stärke des elektrischen Felds wird über eine an zwei gegenüberliegenden Elektroden anliegende Steuerspannung generiert, wobei eine der Elektroden von der verspiegelten Membran gebildet ist.

Gemäß dem erfindungsgemäßen Verfahren wird während einer Einlernphase eine zu detektierende Marke nacheinander in unterschiedlichen Abständen zur Vorrichtung positioniert. Bei den einzelnen Abständen wird die Fokuslage durch periodisches Variieren der Biegungsamplitude der verspiegelten Membran variiert. Dabei wird jeweils die kleinste und größte Fokuslage, bei welchen die Marke noch erfaßbar ist, in Abhängigkeit des Abstands der Marke erfaßt. Dabei wird zweckmäßigerweise mittels der Sendelichtstrahlen der Abstand der Marke bestimmt. Aus der größten und kleinsten Fokuslage wird dann jeweils für jeden Abstand der Sollwert für die Fokuslage ermittelt und in Form einer Kennlinie abgespeichert.

Während der auf die Einlernphase folgenden Betriebsphase wird wieder der Abstand einer Marke bestimmt. Für diesen Abstand wird der zugehörige Sollwert der Fokuslage ausgelesen und in der Vorrichtung eingestellt.

Erfindungsgemäß wird in der Kennlinie nicht unmittelbar der Sollwert für die Fokuslage abgespeichert, sondern der zugehörige Sollwert der Steuerspannung an den Elektroden. Somit wird während der Betriebsphase für einen bestimmten Abstand der Marke zur Vorrichtung die entsprechende Steuerspannung ausgelesen und in der Vorrichtung eingestellt.

Um ein Driften der Steuerspannung zu unterbinden wird diese in einer vorteilhaften Ausführungsform auf einen bestimmten Sollwert eingeregelt. Hierzu wird mittels optischer Mittel die Strahldivergenz der Sendelichtstrahlen erfaßt. Daraus wird in der Auswerteeinheit der optoelektronischen Vorrichtung die Fokuslage errechnet. Dies ist deshalb möglich, da zwischen der Fokuslage und der Strahldivergenz der Sendelichtstrahlen ein eindeutiger Zusammenhang besteht. Aus der so bestimmten Fokuslage wird der zugehörige Wert der Steuerspannung errechnet, auf welchen die Steuerspannung eingeregelt wird.

Die Erfindung wird im nachstehenden anhand der Zeichnungen erläutert. Es zeigen:
- Figur 1:: Blockschaltbild der erfindungsgemäßen optoelektronischen Vorrichtung.
- Figur 2:: Aufbau eines Ausführungsbeispiels einer durchbiegbaren Membran zur Variation der Fokuslage der Sendelichtstrahlen der Vorrichtung gemäß Figur 1.
- Figur 3:: Anordnung von optischen Mitteln zur Bestimmung der Strahldivergenz der Sendelichtstrahlen der Vorrichtung gemäß Figur 1.

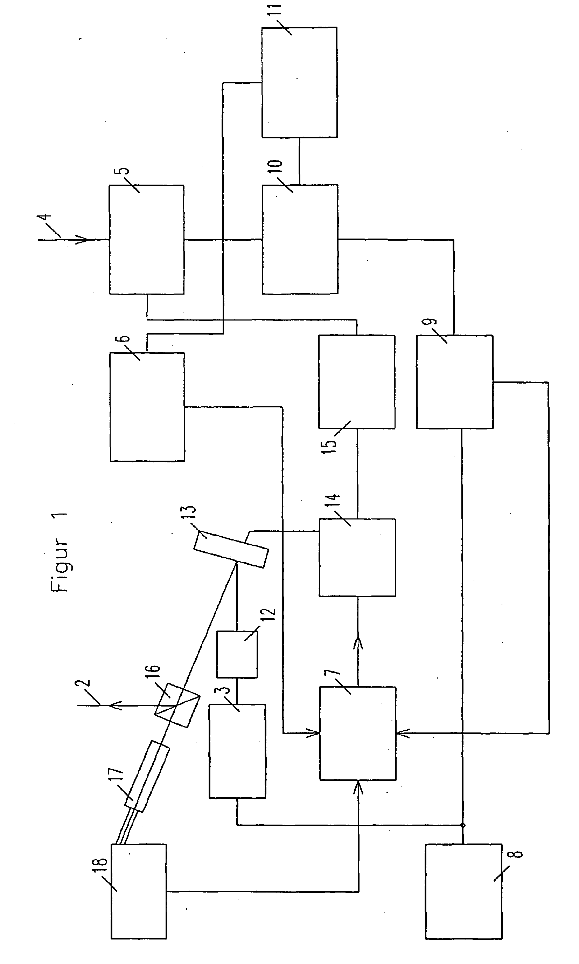

Figur 1 zeigt ein Blockschaltbild eines Ausführungsbeispiels der erfindungsgemäßen optoelektronischen Vorrichtung 1 zum Erfassen von Marken. Dabei können die Marken insbesondere von Barcodes gebildet sein.

Die optoelektronische Vorrichtung 1 weist einen Sendelichtstrahlen 2 emittierenden Sender 3 und einen Empfangslichtstrahlen 4 empfangenden Empfänger 5 auf. Der Sender 3 ist im vorliegenden Ausführungsbeispiel von einer Laserdiode gebildet. Der Empfänger 5 ist als Avalanche-Photodiode ausgebildet.

Die Marken werden von den Sendelichtstrahlen 2 periodisch abgetastet. Hierzu werden die Sende- 2 und Empfangslichtstrahlen 4 über eine nicht dargestellte Ablenkeinheit geführt. Die Ablenkeinheit kann beispielsweise ein rotierendes Polygonspiegelrad aufweisen, welches mehrere verspiegelte Facetten aufweist, an welchen die Sende- 2 und Empfangslichtstrahlen 4 reflektiert werden. Entsprechend der Anzahl der Facetten des Polygonspiegelrads überstreichen die Sendelichtstrahlen 2 einen vorgegebenen Winkelbereich.

Die Marken weisen bestimmte Kontrastmuster in Form von hellen und dunklen Flächen auf. Für den Fall, daß die Marken als Barcodes ausgebildet sind, sind die Kontrastmuster als Folgen von vorzugsweise schwarzen und weißen, nebeneinanderliegenden Strichelementen gebildet. Durch die Reflexion an den Marken weisen die Empfangslichtstrahlen 4 eine den Kontrastmustern entsprechende Amplitudenmodulation auf, die in einer Auswerteeinheit zur Erfassung der Marken ausgewertet werden. Im vorliegenden Ausführungsbeispiel dient die optoelektronische Vorrichtung 1 allein zum Lesen von Barcodes. Dementsprechend weist die Auswerteeinheit einen Barcode-Decoder 6 auf, der an einen Microcontroller 7 angeschlossen ist. Die am Ausgang des Empfängers 5 anstehenden Empfangssignale werden in den Barcode-Decoder 6 eingelesen. Anhand der Amplitudenmodulation der Empfangssignale, die durch die Kontrastmuster der Barcodes diesen aufgeprägt ist, wird der entsprechende Barcode im Barcode-Decoder 6 erfaßt und in den Microcontroller 7 eingelesen.

Mit den Sendelichtstrahlen 2 der optoelektronischen Vorrichtung 1 werden nicht nur Barcodes erfaßt und erkannt. Vielmehr wird damit auch deren Distanz zur optoelektronischen Vorrichtung 1 bestimmt. Im vorliegenden Ausführungsbeispiel erfolgt die Distanzmessung nach dem Phasenmeßprinzip.

Hierzu wird den Sendelichtstrahlen 2 eine Amplitudenmodulation aufgeprägt, welche um Größenordnungen hochfrequenter als die Amplitudenmodulation der Empfangslichtstrahlen 4 infolge der Kontrastmuster der Barcodes ist. Zur Erzeugung der Amplitudenmodulation der Sendelichtstrahlen 2 ist ein Oszillator 8 vorgesehen, der an den Sender 2 angeschlossen ist. Mittels des Oszillators 8 wird die Taktfrequenz für die Amplitudenmodulation der Sendelichtstralhlen 2 vorgegeben, die vorzugsweise bei 40 MHz liegt. Alternativ kann der Sender vorzugsweise rechteckige Sendelichtimpulse mit einer Pulsfrequenz von 40 MHz emittieren.

Zur Durchführung der Distanzmessung werden in einer Distanz-Meßeinheit 9 die Phasen der mit der Taktfrequenz des Oszillators 8 amplitudenmodulierten Sende- 2 und Empfangslichtstrahlen 4 verglichen. Hierzu ist der Oszillator 8 und der Empfänger 5 an die Distanz-Meßeinheit 9 angeschlossen. Die am Ausgang des Empfängers 5 anstehenden Empfangssignale werden zuerst in einem Filter 10, vorzugsweise einem Sinus-Filter, gefiltert und dann der Distanz-Meßeinheit 9 zugeführt.

Um Beeinflussungen durch die im Oszillator 8 erzeugte Amplitudenmodulation der Sende- 2 und Empfangslichtstrahlen 4 bei der Auswertung der Empfangsignale im Barcode-Decoder 6 auszuschließen, ist an das Filter 10 ein Demodulator 11 angeschlossen, der diese Amplitudenmodulation bei den Empfangssignalen im Barcode-Decoder 6 ausfiltert. Hierzu ist der Ausgang des Demodulators 11 an einen Eingang des Barocde-Decoders 6 angeschlossen.

Die Sendelichtstrahlen 2 werden auf eine bestimmte Fokuslage fokussiert. Nur im Bereich der Fokuslage der Sendelichtstrahlen 2 angeordnete Marken können mittels der optoelektronischen Vorrichtung 1 erfaßt werden.

Zur Einstellung der Fokuslage werden die vom Sender 3 emittierten Sendelichtstrahlen 2 über eine erste Kollimatorlinse 12 zu einer verspiegelten Membran 13 geführt und daran reflektiert. Die durch die Kollimatorlinse 12 geführten Sendelichtstrahlen 2 bilden ein im wesentlichen paralleles Strahlenbündel. Der Flächennormalenvektor der verspiegelten Membran 12 verläuft im wesentlichen parallel zur Strahlachse der auftreffenden Sendelichtstrahlen 2. Erfindungsgemäß kann die verspiegelte Membran 13 in Richtung des Flächennormalenvektors durch Anlegen eines elektrischen Feldes durchgebogen werden. Entsprechend dem Grad der Durchbiegung ergibt sich dabei eine bestimmte Fokuslage der Sendelichtstrahlen 2.

Das zur Durchbiegung der verspiegelten Membran 13 notwendige elektrische Feld wird über eine Hochspannungsquelle 15 erzeugt, welche eine Steuerspannung generiert, die an zwei in Abstand zueinander angeordneten Elektroden anliegt. Dabei ist eine der Elektroden von der verspiegelten Membran 13 selbst gebildet.

Der Microcontroller 7 ist über einen Hochspannungsverstärker 14 an die Hochspannungsquelle 15 angeschlossen. Dabei wird der Hochspannungsverstärker 14 vom Microcontroller 7 angesteuert, wodurch die Steuerspannung an den Elektroden einstellbar ist. Der Variationsbereich der Steuerspannung umfaßt dabei typischerweise etwa 300 Volt.

Die an der verspiegelten Membran 13 reflektierten Sendelichtstrahlen 2 werden auf einen Strahlteilerspiegel 16 geführt. Ein Teil der Sendelichtstrahlen 2 wird am Strahlteilerspiegel 16 reflektiert und von dort zur Ablenkeinheit geführt. Der andere Teil der Sendelichtstrahlen 2 durchsetzt den Strahlteilerspiegel 16 und wird über optische Mittel 17 geführt, mittels derer die Strahldivergenz der Sendelichtstrahlen 2 erfaßbar ist. Die Sendelichtstrahlen 2 werden dabei am Ausgang der optischen Mittel 17 auf eine Meßeinheit 18 geführt, in welcher die Strahldivergenz der Sendelichtstrahlen 2 bestimmt wird. Der Ausgang der Meßeinheit 18 ist an den Microcontroller 7 angeschlossen.

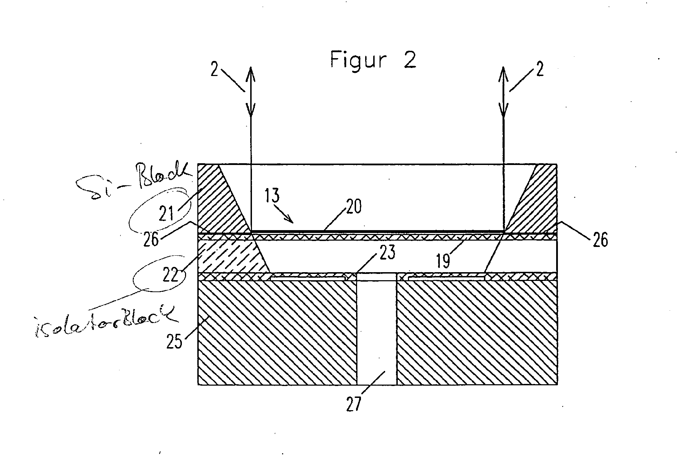

In Figur 2 ist der Aufbau der verspiegelten Membran 13 zur Einstellung der Fokuslage der Sendelichtstrahlen 2 dargestellt. Die verspiegelte Membran 13 weist einen kreisförmigen Querschnitt auf, wobei der Durchmesser der Membran etwa im Bereich zwischen 7 und 8 mm liegt. Durch die kreisförmige Ausbildung der verspiegelten Membran 13 ist deren Geometrie sehr gut an die Strahlgeometrie der Sendelichtstrahlen 2 angepaßt. Die verspiegelte Membran 13 besteht aus einer dünnen Silizium-Membran 19 auf welche als Spiegelfläche, an der die Sendelichtstrahlen 2 reflektiert werden, eine Metallschicht 20 aufgedampft ist. Die Dicke der verspiegelten Membran 13 beträgt etwa 0,003-0,005 mm. Prinzipiell kann anstelle einer Silizium-Membran auch eine HMDSN-Membran verwendet werden.

Die verspiegelte Membran 13 ist randseitig zwischen einem Silizium-Block 21 und einem Isolator-Block 22 gelagert. Sowohl der Silizium-Block 21 als auch der Isolator-Block 22 sind dabei ringförmig ausgebildet und umranden die verspiegelte Membran 13. Der Isolator-Block 22 sitzt auf einer Isolationsschicht 23 auf, welche im wesentlichen dieselbe Form wie die Silizium-Membran 19 aufweist. In der Isolationsschicht 23 liegt eine flächige, im wesentlichen kreisförmige Metallschicht 24, welche in konstantem Abstand zu der von der verspiegelten Membran 13 gebildeten ersten Elektrode angeordnet ist und die zweite Elektrode bildet. Die Isolationsschicht 23 sitzt wiederum auf einem Keramiksubstrat 25 auf.

Die Außenflächen des Silizium-Blocks 21, des Isolator-Blocks 22, der Isolationsschicht 23, der Silizium-Membran 19, sowie des Keramiksubstrats 25 schließen bündig miteinander ab und bilden eine Mantelfläche eines Kreiszylinders. Die inneren Seitenflächen des Silizium-Blocks 21 und des Isolator-Blocks 22 laufen konisch auf die Isolationsschicht 23 zu. Dabei verjüngt sich der Durchmesser des Konus vom oberen Rand des Silizium-Blocks 21 zur Isolationsschicht 23 hin. Die Seitenwände des Silizium-Blocks 21 bilden somit einen Trichter für die einfallenden Sendelichtstrahlen 2. Durch die konische Ausbildung des Isolator-Blocks 22 verbleibt ein Zwischenraum zwischen der verspiegelten Membran 13 und der die zweite Elektrode bildenden Metallschicht 24 in der Isolationsschicht 23.

Die Silizium-Membran 19 wird durch anisotropes Plasma-Ätzen aus einem Silizium-Wafer hergestellt.

Durch dieses Ätzverfahren wird die Herstellung kreisförmiger Silizium-Membranen 19 ermöglicht. Vorzugsweise wird durch das Plasma-Ätzen der Silizium-Block trichterförmig eingefräst, wobei eine SiO₂-Schicht 26 auf der Silizium-Membran 19 den Ätzprozeß begrenzt. Nach Beenden des Ätzprozesses wird der über den Silizium-Block 21 hervorstehende Teil der SiO₂-Schicht 26 entfernt. Wie in Figur 2 dargestellt ist somit nur noch die SiO₂-Schicht 26 zwischen der Silizium-Membran 19 und dem Silizium-Block 21 erhalten.

Der Isolator-Block 22 und das Keramiksubstrat 25 werden in Dickfilmtechnik hergestellt. Die Silizium-Membran 19 wird dann auf den Isolator-Block 22 aufgeklebt. Vorzugsweise weisen der Isolator-Block 22, das Keramiksubstrat 25 sowie die Silizium-Membran 19 jeweils die gleichen oder wenigstens nahezu die gleichen Dehnungskoeffizienten auf Dadurch und durch die spannungsarme Montage der Silizium-Membran 19 auf dem Isolator-Block 22 ist gewährleistetet, daß keine unerwünschten Spannungen in der Silizium-Membran 19 auftreten.

Im Keramiksubstrat 25 ist eine Bohrung 27 vorgesehen, welche das Keramiksubstrat 25 axial durchsetzt und in Zwischenraum zwischen den Elektroden ausmündet.

Prinzipiell können auch mehrere Bohrungen 27 vorgesehen sein, welche das Keramiksubstrat 25 oder den Isolator-Block 22 durchsetzen.

Die Bohrung 27 im Keramiksubstrat 25 weist einen kreisförmigen Querschnitt auf Die Längsachse der Bohrung 27 verläuft in der Symmetrieachse der verspiegelten Membran 13. Die Elektrode in der Isolationsschicht 23 ist so dimensioniert, daß sie nicht bis zur Bohrung 27 reicht. Demzufolge ist die Bohrung 27 im Bereich ihrer Ausmündung in den Zwischenraum zwischen den Elektroden vollständig mit der Isolationsschicht 23 ummantelt.

Durch die Bohrung 27 wird Luft von außen in den Zwischenraum zwischen den Elektroden geführt. Je nach Höhe der Luftsäule in der Bohrung 27 und im Zwischenraum ändert sich dabei das Schwingungsverhalten der verspiegelten Membran 13. Prinzipiell kann dabei die Höhe der Luftsäule auch durch Einführen eines nicht dargestellten Rohres in die Bohrung 27 geändert werden. Insbesondere kann durch eine geeignete Wahl der Bohrungen 27 der Frequenzgang der verspiegelten Membran 13 abgestimmt werden.

Durch Variation der Steuerspannung an den Elektroden kann die Amplitude der Durchbiegung der verspiegelten Membran 13 variiert werden. Typischerweise liegt die obere Grenzfrequenz der Schwingungen der verspiegelten Membran 13 im unteren Kilo-Hertz-Bereich, typischerweise etwa bei 5 KHz. Die maximale Biegungsamplitude der verspiegelten Membran 13 liegt etwa im Bereich von 0,007 mm.

Bei nicht durchgebogener verspiegelter Membran 13 wird das einfallende parallele Strahlenbündel wieder als paralleles Strahlenbündel von der verspiegelten Membran 13 zurückreflektiert. Je nach Durchbiegung der verspiegelten Membran 13 ergibt sich eine Fokuslage der Sendelichtstrahlen 2 in einem bestimmten Abstand zur optoelektronischen Vorrichtung 1.

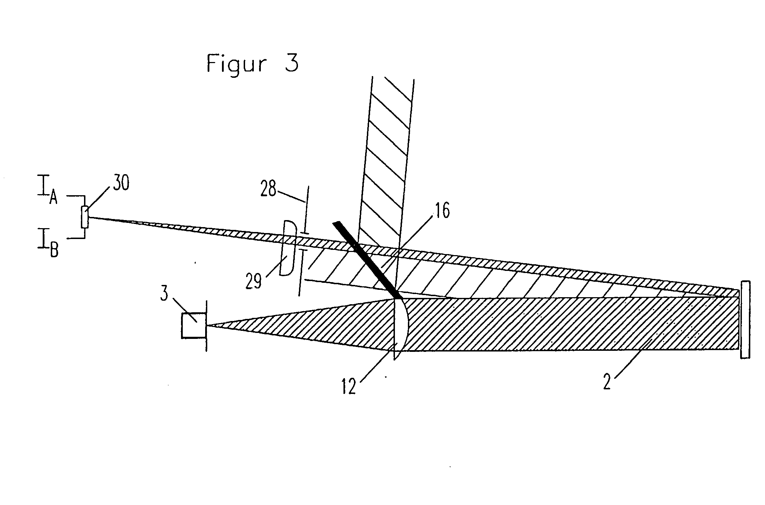

In Figur 3 sind die optischen Mittel 17 zur Bestimmung der jeweiligen Fokuslage der Sendelichtstrahlen 2 detailliert dargestellt.

Die vom Sender 3 emittierten Sendelichtstrahlen 2 werden über die erste Kollimatorlinse 12 und die verspiegelte Membran 13 zum Strahlteilerspiegel 16 geführt. Die diesen Strahlteilerspiegel 16 durchsetzenden Sendelichtstrahlen 2 treffen auf ein Blende 28, wobei die Blendenöffnung so angeordnet ist, daß nur die Sendelichtstrahlen 2, die in einem begrenzten Randbereich die erste Kollimatorlinse 12 durchsetzen auch durch die Blendenöffnung gelangen.

Die die Blendenöffnung durchsetzenden Sendelichtstrahlen 2 werden über eine zweite Kollimatorlinse 29 zu einem PSD-Element 30 geführt. Die erste und zweite Kollimatorlinse 12, 29 sind zweckmäßigerweise identisch ausgebildet. In Abhängigkeit der Divergenz der vom Sender 3 emittierten Sendelichtstrahlen 2 ergibt sich eine bestimmte Lage des Lichtflecks der Sendelichtstrahlen 2 auf dem PSD-Element 30.

Das PSD-Element 30 weist an seinen Ende zwei Zuleitungen auf, an welchen Ströme I_{A} und I_{B} abgegriffen werden. Diese Ströme I_{A} und I_{B} werden als Eingangssignale in die nachgeordnete Meßeinheit 18 eingelesen. Dort wird durch das Bilden der Differenz oder des Quotienten der Eingangssignale die Lage des Lichtflecks auf dem PSD-Element 30 ermittelt. Aus dieser Meßgröße wird schließlich im Microcontroller 7 die Strahldivergenz der Sendelichtstrahlen 2 und daraus schließlich die Fokuslage der Sendelichtstrahlen 2 berechnet.

Die Einstellung der Sendelichtstrahlen 2 auf eine geeignete Fokuslage erfolgt während einer Einlernphase. Während der Einlernphase wird eine Marke nacheinander in unterschiedlichen Abständen zur Vorrichtung 1 positioniert und dabei jeweils von den Sendelichtstrahlen 2 abgetastet. Während der Abtastung der Marke in einem vorgegebenen Abstand wird zudem durch Variation der Steuerspannung an den Elektroden die Fokuslage der Sendelichtstrahlen 2 in einem vorgegebenen Bereich kontinuierlich geändert.

Der Abstand der Marke zur Vorrichtung 1 wird durch die Distanzmessung mittels der Sendelichtstrahlen 2 fortlaufend erfaßt.

Für jeden Abstand wird jeweils die größte und kleinste Fokuslage erfaßt, bei welcher die Marke noch erfaßbar ist. Aus dem Wert der größten und kleinsten Fokuslage wird dann eine für den entsprechenden Abstand den Sollwert bildende Fokuslage berechnet.

Zweckmäßigerweise wird zur Berechnung des Sollwerts jeweils für die größte und kleinste Fokuslage der entsprechende Wert der Steuerspannung abgespeichert und aus den beiden Werten der Mittelwert gebildet.

Die so gebildeten Mittelwerte der Steuerspannungen werden als Sollwerte in Abhängigkeit des Abstands der Marke in Form einer Kennlinie abgespeichert.

Während der auf die Einlernphase folgenden Betriebsphase werden die Marken mittels der Sendelichtstrahlen 2 fortlaufend abgetastet, wobei auch die Distanz der Marken zur Vorrichtung 1 ermittelt wird. Für den aktuellen Distanzwert wird dann aus der Kennlinie der Sollwert für die Steuerspannung ausgelesen. Über den Microcontroller 7 wird die dem Sollwert entsprechende Steuerspannung an die Elektroden angelegt, wodurch die der Steuerspannung entsprechende Fokuslage der Sendelichtstrahlen 2 eingestellt wird.

Durch Störeinflüsse wie zum Beispiel Temperaturdriften bei der Einstellung der Durchbiegung der verspiegelten Membran 13 kann sich die Fokuslage im Laufe der Zeit ändern. Um diese Störfaktoren zu eliminieren wird mit den optischen Mitteln 17 die jeweils aktuelle Fokuslage der Sendelichtstrahlen 2 bestimmt, in dem deren Strahldivergenz gemessen wird.

Weicht die aktuelle Fokuslage von dem durch die Kennlinie vorgegebenen Sollwert ab, so wird im Microcontroller 7 aus der Differenz zwischen dem Sollwert und der aktuellen Fokuslage eine Steuerspannung errechnet, welche dem vorgegebenen Sollwert entspricht.

## Patentansprüche

1. Optoelektronische Vorrichtung (1) zum Erkennen von Marken, insbesondere von Barcodes, mit einem auf eine Fokuslage fokussierten Sendelichtstrahlen emittierenden Sender, einem Empfangslichtstrahlen empfangenden Empfänger, wobei die Marken mittels der Sendelichtstrahlen periodisch abgetastet werden, wobei zur Einstellung der Fokuslage der Sendelichtstrahlen (2) in deren Strahlengang eine verspiegelte Membran (13) vorgesehen ist, an welcher die Sendelichtstrahlen (2) reflektiert werden und welche durch Anlegen eines elektrischen Feldes biegbar ist, wobei zur Erzeugung des elektrischen Feldes zwei in Abstand gegenüberliegende, flächige Elektroden vorgesehen sind, wobei eine der Elektroden von der verspiegelten Membran (13) gebildet ist, und wobei die Stärke des elektrischen Feldes über eine Steuerspannung an den Elektroden vorgebbar ist, **dadurch gekennzeichnet, dass** zur Bestimmung der Fokuslagen der Sendelichtstrahlen (2) optische Mittel (17) zum Erfassen der Strahldivergenzen der Sendelichtstrahlen (2) vorgesehen sind, dass eine Auswerteeinheit zur Umrechnung der Strahldivergenzen in die Fokuslagen der Sendelichtstrahlen (2) vorgesehen ist, und dass die optoelektronische Vorrichtung (1) dafür eingerichtet ist, die Steuerspannungen als Maß für die Fokuslagen als Kennlinie abzuspeichern.

2. Optoelektronische Vorrichtung nach Anspruch 1, **dadurch gekennzeichnet, daß** die verspiegelte Membran (13) einen kreisförmigen Querschnitt aufweist, wobei deren Oberflächennormale mit der Strahlachse der Sendelichtstrahlen (2) zusammenfällt.

3. Optoelektronische Vorrichtung nach einem der Ansprüche 1 oder 2, **dadurch gekennzeichnet, daß** die verspiegelte Membran (13) von einer Silizium Membran (19) mit aufgedampfter Metallschicht (20) gebildet ist.

4. Optoelektronische Vorrichtung nach einem der Ansprüche 1 bis 3, **dadurch gekennzeichnet, daß** die verspiegelte Membran (13) randseitig zwischen einem Silizium-Block (21) und einem Isolator-Block (22) gelagert ist.

5. Optoelektronische Vorrichtung nach Anspruch 4, **dadurch gekennzeichnet, daß** der Isolator-Block (22) auf einer Isolationsschicht (23) aufsitzt, in welcher die zweite Elektrode verläuft.

6. Optoelektronische Vorrichtung nach Anspruch 5, **dadurch gekennzeichnet, daß** die Innenflächen des Silizium-Blocks (21) und des Isolator-Blocks (22) konisch auf die Isolationsschicht (23) zulaufen.

7. Optoelektronische Vorrichtung nach einem der Ansprüche 5 oder 6, **dadurch gekennzeichnet, daß** die Isolationsschicht (23) auf einem Keramiksubstrat (25) aufsitzt.

8. Optoelektronische Vorrichtung nach Anspruch 7, **dadurch gekennzeichnet, daß** eine oder mehrere Bohrungen (27) vorgesehen sind, welche das Keramiksubstrat (25) und / oder den Isolator-Block (22) durchsetzen und im Zwischenraum zwischen den Elektroden ausmünden.

9. Optoelektronische Vorrichtung nach einem der Ansprüche 7 oder 8, **dadurch gekennzeichnet, daß** die Bohrung (27) koaxial zur Symmetrieachse der verspiegelten Membran (13) verlaufend das Keramiksubstrat (25) und die darüberliegende Isolationsschicht (23) koaxial durchsetzt.

10. Optoelektronische Vorrichtung nach einem der Ansprüche 1 bis 9, **dadurch gekennzeichnet, daß** die optischen Mittel (17) zum Erfassen der Strahldivergenz zwei Kollimatorlinsen (12, 29) umfassen, wobei eine Kollimatorlinse (12) der verspiegelten Membran (13) vorgeordnet und die zweite Kollimatorlinse (12) der verspiegelten Membran (13) nachgeordnet ist, und wobei mittels einer Blende (28) die an einem Randbereich der verspiegelten Membran (13) reflektierten Sendelichtstrahlen (2) über die zweite Kollimatorlinse (29) zu einem PSD-Element (30) geführt sind.

11. Optoelektronische Vorrichtung nach Anspruch 10, **dadurch gekennzeichnet, daß** die Kollimatorlinsen (12, 29) identisch ausgebildet sind.

12. Optoelektronische Vorrichtung nach einem der Ansprüche 10 oder 11, **dadurch gekennzeichnet, daß** die Lage des Lichtflecks der Sendelichtstrahlen (2) auf dem PSD-Element (30) in der Auswerteeinheit als Maß für die Divergenz der Sendelichtstrahlen (2) ausgewertet wird.

13. Optoelektronische Vorrichtung nach einem der Ansprüche 1 bis 12, **dadurch gekennzeichnet, daß** die aktuelle Fokuslage der Sendelichtstrahlen (2) als Regelgröße zur Regelung der Steuerspannung zur Erzeugung des elektrischen Feldes zwischen den Elektroden dient.

14. Optoelektronische Vorrichtung nach Anspruch 13, **dadurch gekennzeichnet, daß** in der Auswerteeinheit aus der Differenz zwischen der aktuellen Fokuslage und der den Sollwert bildenden Fokuslage eine Steuerspannung errechnet wird, welche dem Sollwert der Fokuslage entspricht.

15. Optoelektronische Vorrichtung nach einem der Ansprüche 1 bis 14, **dadurch gekennzeichnet, daß** mittels der vom Sender (3) emittierten Sendelichtstrahlen (2) die Distanz einer Marke zur Vorrichtung (1) bestimmt wird.

16. Optoelektronische Vorrichtung nach Anspruch 15, **dadurch gekennzeichnet, daß** die Distanzmessung nach dem Phasenmeßprinzip erfolgt.

17. Optoelektronische Vorrichtung nach Anspruch 16, **dadurch gekennzeichnet, daß** den Sendelichtstrahlen (2) eine Amplitudenmodulation aufgeprägt ist oder daß der Sender periodisch Sendelichtimpulse emittiert.

18. Verfahren zur Einstellung der Fokuslage bei einer optoelektronischen Vorrichtung gemäß einem der Ansprüche 1 bis 17, **dadurch gekennzeichnet, daß** während einer Einlernphase eine Marke nacheinander in unterschiedlichen Abständen zur Vorrichtung (1) positioniert wird, daß bei den einzelnen Abständen die Fokuslage der Sendelichtstrahlen (2) durch periodisches Variieren der Biegungsamplitude der verspiegelten Membran (13) variiert wird, daß jeweils die größte und kleinste Fokuslage, bei welcher die Marke noch erfaßbar ist, in Abhängigkeit des Abstands der Marke erfaßt wird, woraus die für den jeweiligen Abstand die den Sollwert bildende Fokuslage ermittelt und in Form einer Kennlinie abgespeichert wird, und daß während der auf die Einlernphase folgenden Betriebsphase der Abstand einer Marke ermittelt wird und der zugehörige Sollwert für die Fokuslage ausgelesen und in der Vorrichtung (1) eingestellt wird.

19. Verfahren nach Anspruch 18, **dadurch gekennzeichnet, daß** als Maß für die Fokuslage der Sendelichtstrahlen (2) die Steuerspannung an den Elektroden erfaßt und abgespeichert wird.

20. Verfahren nach Anspruch 19, **dadurch gekennzeichnet, daß** zur Ermittlung der den Sollwert bildenden Fokuslage der Mittelwert der Steuerspannungen für die größte und kleinste Fokuslage, bei welchen bei einem Abstand die Marke noch erfaßbar ist, gebildet wird und in Abhängigkeit des Abstands abgespeichert wird.

21. Verfahren nach einem der Ansprüche 18 bis 20, **dadurch gekennzeichnet, daß** während der Betriebsphase die Steuerspannung auf den Sollwert eingestellt wird.

22. Verfahren nach einem der Ansprüche 18 bis 21, **dadurch gekennzeichnet, daß** die Steuerspannung auf den vorgegebenen Sollwert eingeregelt wird.

## Claims

1. Optoelectronic device (1) for recognition of marks, particularly of barcodes, with a transmitter emitting transmitted light beams focussed on a focus position, a receiver receiving received light beams, wherein the marks are periodically scanned by means of the transmitted light beams, wherein for setting the focus position of the transmitted light beams (2) a reflective membrane (13), at which the transmitted light beams (2) are reflected and which is bendable by application of an electrical field, is provided in the beam path of the transmitted light beams, wherein two area electrodes disposed opposite at a spacing are provided for generating the electrical field, wherein one of the electrodes is formed by the reflective membrane (13) and wherein the strength of the electrical field is presettable by way of a control voltage at the electrodes, **characterised in that** for determination of the focus positions of the transmitted light beams (2) optical means (17) for detection of the beam divergencies of the transmitted light beams (2) are provided, that an evaluating unit for recalculation of the beam divergencies in the focus positions of the transmitted light beams (2) is provided and that the optoelectronic device (1) is equipped for the purpose of storing the control voltages, as a measure for the focus positions, in the form of a characteristic curve.

2. Optoelectronic device according to claim 1, **characterised in that** the reflective membrane (13) has a circular cross-section, wherein the surface normals thereof are coincident with the beam axis of the transmitted light beams (2).

3. Optoelectronic device according to one of claims 1 and 2, **characterised in that** the reflective membrane (13) is formed by a silicon membrane (19) with vapour-deposited metal layer (20).

4. Optoelectronic device according to any one of claims 1 to 3, **characterised in that** the reflective membrane (13) is mounted at the edge between a silicon block (21) and an insulator block (22).

5. Optoelectronic device according to claim 4, **characterised in that** the insulator block (22) is seated on an insulation layer (23) in which the second electrode extends.

6. Optoelectronic device according to claim 5, **characterised in that** the inner surfaces of the silicon block (21) and insulator block (22) run in conically onto the insulating layer (23).

7. Optoelectronic device according to one of claims 5 and 6, **characterised in that** the insulating layer (23) is seated on a ceramic substrate (25).

8. Optoelectronic device according to claim 7, **characterised in that** one or more bores (27) are provided, which penetrate the ceramic substrate (25) and/or the insulator block (22) and open in the intermediate space between the electrodes.

9. Optoelectronic device according to one of claims 7 and 8, **characterised in that** the bore (27) coaxially penetrates the ceramic substrate (25) and the insulating layer (23) disposed thereabove by running coaxially with respect to the axis of symmetry of the reflective membrane (13).

10. Optoelectronic device according to any one of claims 1 to 9, **characterised in that** the optical means (17) for detecting the beam divergency comprise two collimator lenses (12, 29), wherein one collimator lens (12) is arranged upstream of the reflective membrane (13) and the second collimator lens (12) is arranged downstream of the reflective membrane (13), and wherein the transmitted light beams (2) reflected at an edge region of the reflective membrane (13) are guided to a PSD element (13) by way of the second collimator lens (29) via an aperture (28).

11. Optoelectronic device according to claim 10, **characterised in that** the collimator lenses (12, 29) are of identical construction.

12. Optoelectronic device according to one of claims 10 and 11, **characterised in that** the position of the light spot of the transmitted light beams (2) on the PSD element (30) is evaluated in the evaluating unit as a measure for the divergency of the transmitted light beams (2).

13. Optoelectronic device according to any one of claims 1 to 12, **characterised in that** the instantaneous focus position of the transmitted light beams (2) serves as a regulating magnitude for regulation of the control voltage for generation of the electrical field between the electrodes.

14. Optoelectronic device according to claim 13, **characterised in that** a control voltage corresponding with the target value of the focus position is calculated in the evaluating unit from the difference between the instantaneous focus position and the focus position forming the target value.

15. Optoelectronic device according to any one of claims 1 to 14, **characterised in that** the distance of a mark from the device (1) is determined by means of the transmitted light beams (2) emitted by the transmitter (3).

16. Optoelectronic device according to claim 15, **characterised in that** the distance measurement is carried out according to the phase measurement principle.

17. Optoelectronic device according to claim 16, **characterised in that** an amplitude modulation is imposed on the transmitted light beams (2) or that the transmitter emits periodic transmitted light pulses.

18. Method for setting the focus position in an optoelectronic device according to any one of claims 1 to 17, **characterised in that** during a learning phase a mark is successively positioned at different spacings from the device (1), that at the individual spacings the focus position of the transmitted light beams (2) is varied by periodic variation of the amplitude bending of the reflective membrane (13), that the respective largest and smallest focus position at which the mark is still detectable is detected in dependence on the spacing of the mark, from which for the respective spacing the focus position forming the target value is determined and is stored in the form of a characteristic curve, and that during the operating phase following the learning phase the spacing of a mark is determined and the associated target value for the focus position is read out and set in the device (1).

19. Method according to claim 18, **characterised in that** as a measure for the focus position of the transmitted light beams (2) the control voltage at the electrodes is detected and stored.

20. Method according to claim 19, **characterised in that** for determining the focus position forming the target value the mean value of the control voltages for the largest and smallest focus position, for which the mark is still detectable at a spacing, is formed and is stored in dependence on the spacing.

21. Method according to any one of claims 18 to 20, **characterised in that** during the operating phase the control voltage is set to the target value.

22. Method according to any one of claims 18 to 21, **characterised in that** the control voltage is regulated to the preset target value.

## Revendications

1. Dispositif optoélectronique (1) pour la détection de marques, en particulier de codes barres, avec un émetteur émettant des rayons lumineux d'émission focalisés sur une position de focalisation, un récepteur recevant des rayons lumineux de réception, les marques étant périodiquement balayées au moyen des rayons lumineux d'émission, une membrane métallisée (13) étant prévue dans le chemin optique des rayons lumineux d'émission (2) pour le réglage de leur position de focalisation, sur laquelle les rayons lumineux d'émission (2) sont réfléchis et qui est fléchissable par application d'un champ électrique, deux électrodes planes situées l'une en face de l'autre à distance étant prévues pour générer le champ électrique, une des électrodes étant formée par la membrane métallisée (13), et l'intensité du champ électrique étant prescriptible par l'intermédiaire d'une tension de commande sur les électrodes, **caractérisé en ce que** pour déterminer les positions de focalisation des rayons lumineux d'émission (2), il est prévu des moyens optiques (17) pour saisir les divergences de faisceau des rayons lumineux d'émission (2), qu'il est prévu une unité d'évaluation pour convertir les divergences de faisceau en positions de focalisation des rayons lumineux d'émission (2) et que le dispositif optoélectronique (1) est conçu pour mémoriser sous forme de courbe caractéristique les tensions de commande servant de critère pour les positions de focalisation.

2. Dispositif optoélectronique selon la revendication 1, **caractérisé en ce que** la membrane métallisée (13) présente une section transversale circulaire, sa normale à la surface coïncidant avec l'axe de faisceau de rayons lumineux d'émission (2).

3. Dispositif optoélectronique selon l'une des revendications 1 ou 2, **caractérisé en ce que** la membrane métallisée (13) est formée par une membrane en silicium (19) avec couche métallique (20) déposée en phase vapeur.

4. Dispositif optoélectronique selon l'une des revendications 1 à 3, **caractérisé en ce que** la membrane métallisée (13) est montée périphériquement entre un bloc de silicium (21) et un bloc isolateur (22).

5. Dispositif optoélectronique selon la revendication 4, **caractérisé en ce que** le bloc isolateur (22) repose sur une couche isolante (23) dans laquelle s'étend la deuxième électrode.

6. Dispositif optoélectronique selon la revendication 5, **caractérisé en ce que** les surfaces intérieures du bloc de silicium (21) et du bloc isolateur (22) se dirigent coniquement vers la couche isolante (23).

7. Dispositif optoélectronique selon l'une des revendications 5 ou 6, **caractérisé en ce que** la couche isolante (23) repose sur un substrat en céramique (25).

8. Dispositif optoélectronique selon la revendication 7, **caractérisé en ce qu'**il est prévu un ou plusieurs perçages (27) qui traversent le substrat en céramique (25) et/ou le bloc isolateur (22) et débouchent dans l'espace entre les électrodes.

9. Dispositif optoélectronique selon l'une des revendications 7 ou 8, **caractérisé en ce que** le perçage (27) traverse le substrat en céramique (25) et la couche isolante (23) sus-jacente en s'étendant coaxialement à l'axe de symétrie de la membrane métallisée (13).

10. Dispositif optoélectronique selon l'une des revendications 1 à 9, **caractérisé en ce que** les moyens optiques (17) pour saisir la divergence de faisceau comprennent deux lentilles collimatrices (12, 29), une lentille collimatrice (12) étant placée en amont de la membrane métallisée (13) et la deuxième lentille collimatrice (12) étant placée en aval de la membrane métallisée (13), et les rayons lumineux d'émission (2) réfléchis sur une région de bord de la membrane métallisée (13) étant guidés au moyen d'un diaphragme (28), par l'intermédiaire de la deuxième lentille collimatrice (29), vers un élément PSD (30).

11. Dispositif optoélectronique selon la revendication 10, **caractérisé en ce que** les lentilles collimatrices (12, 29) sont identiques.

12. Dispositif optoélectronique selon l'une des revendications 10 ou 11, **caractérisé en ce que** la position du spot lumineux des rayons lumineux d'émission (2) sur l'élément PSD (30) est évaluée dans l'unité d'évaluation en tant que critère de la divergence des rayons lumineux d'émission (2).

13. Dispositif optoélectronique selon l'une des revendications 1 à 12, **caractérisé en ce que** la position de focalisation actuelle des rayons lumineux d'émission (2) sert de grandeur réglée pour le réglage de la tension de commande servant à générer le champ électrique entre les électrodes.

14. Dispositif optoélectronique selon la revendication 13, **caractérisé en ce qu'**une tension de commande qui correspond à la valeur de consigne de la position de focalisation est calculée dans l'unité d'évaluation à partir de la différence entre la position de focalisation actuelle et la position de focalisation formant la valeur de consigne.

15. Dispositif optoélectronique selon l'une des revendications 1 à 14, **caractérisé en ce** la distance d'une marque par rapport au dispositif (1) est déterminée au moyen des rayons lumineux d'émission (2) émis par l'émetteur (3).

16. Dispositif optoélectronique selon la revendication 15, **caractérisé en ce que** la mesure de distance est réalisée selon le principe de la mesure de phase.

17. Dispositif optoélectronique selon la revendication 16, **caractérisé en ce qu'**une modulation d'amplitude est appliquée aux rayons lumineux d'émission (2) ou que l'émetteur émet périodiquement des impulsions de lumière d'émission.

18. Procédé pour régler la position de focalisation dans un dispositif optoélectronique selon l'une des revendications 1 à 17, **caractérisé en ce que**, pendant une phase d'apprentissage, une marque est positionnée successivement à différentes distances par rapport au dispositif (1), qu'aux différentes distances on fait varier la position de focalisation des rayons lumineux d'émission (2) en faisant varier périodiquement l'amplitude de flexion de la membrane métallisée (13), qu'à chaque fois la plus grande et la plus petite positions de focalisation auxquelles la marque peut encore être saisie sont saisies en fonction de la distance de la marque, à partir de quoi la position de focalisation formant la valeur de consigne est déterminée pour la distance respective et mémorisée sous la forme d'une courbe caractéristique, et que, pendant la phase d'exploitation qui suit la phase d'apprentissage, la distance d'une marque est déterminée et la valeur de consigne associée pour la position de focalisation est lue et réglée dans le dispositif (1).

19. Procédé selon la revendication 18, **caractérisé en ce que** la tension de commande aux électrodes est saisie et mémorisée comme critère de la position de focalisation des rayons lumineux d'émission (2).

20. Procédé selon la revendication 19, **caractérisé en ce que** pour déterminer la position de focalisation formant la valeur de consigne, la moyenne des tensions de commande pour la plus grande et la plus petite positions de focalisation auxquelles la marque peut encore être saisie pour une distance est formée et mémorisée en fonction de la distance.

21. Procédé selon l'une des revendications 18 à 20, **caractérisé en ce que** pendant la phase d'exploitation, la tension de commande est réglée à la valeur de consigne.

22. Procédé selon l'une des revendications 18 à 21, **caractérisé en ce que** la tension de commande est ajustée sur la valeur de consigne prescrite.
